# FASCICULE DE BREVET EUROPEEN

(11) **EP 0 669 221 B1**
(45) Date de publication et mention de la délivrance du brevet: **23.04.1997**
(21) Numéro de dépôt: 95400003.0
(22) Date de dépôt: 02.01.1995
(51) Int. Cl.: B60N 2/46

(54) **Accoudoir réglable en hauteur pour véhicule automobile**
Höhenverstellbare Armlehne für Kraftfahrzeuge
Height adjustable armrest for automotive vehicles

(30) Priorité: 28.02.1994 FR 9402267
(43) Date de publication de la demande: 30.08.1995
(73) Titulaire: AUTOMOBILES PEUGEOT, 75116 Paris (FR); AUTOMOBILES CITROEN, 92200 Neuilly-sur-Seine (FR)
(72) Inventeur: Jouanny, Thierry, F-92250 La Garenne Colombes (FR)
(74) Mandataire: Polus, Camille

(56) Documents cités:
- DE-A- 3 216 931
- FR-A- 1 473 944
- FR-A- 1 495 794
- US-A- 4 824 172

## Description

La présente invention concerne un accoudoir réglable en hauteur pour véhicule automobile.

Il est connu de fixer dans l'habitacle d'un véhicule automobile, par exemple sur les portières de ce véhicule, des accoudoirs associés aux sièges avant ou à la banquette arrière du véhicule.

Habituellement, la hauteur des accoudoirs est déterminée en fonction de la morphologie d'un occupant de taille moyenne. La hauteur des accoudoirs n'est donc pas bien adaptée à des occupants dont la morphologie s'écarte notablement de la morphologie moyenne prise en compte pour positionner les accoudoirs.

Pour remédier à cet inconvénient, on a proposé des accoudoirs pour véhicule automobile, du type décrit dans le préambule de la revendication indépendante, c'est-à-dire comportant une partie inférieure fixe, formant corps d'accoudoir, portant une partie supérieure formant appui pour un coude d'utilisateur, mobile en hauteur par rapport à la partie fixe, et des moyens de réglage de la hauteur de la partie mobile par rapport à la partie fixe.

Cependant, les moyens de réglage de ce type d'accoudoir comprennent généralement des moyens électriques coûteux dont le montage dans l'habitacle est complexe à réaliser.

FR-A-2 632 171 et US-A-4 619 478 décrivent de tels moyens électriques.

US-A-4 824 172 décrit un dossier pour siège de véhicule automobile mobile en hauteur comportant des moyens de réglage qui comprennent des moyens mécaniques de poussée sollicitant élastiquement le dossier vers une position haute et des moyens mécaniques de blocage de ces moyens de poussée dans une position sélectionnée.

DE-A-3 216 931 décrit un accoudoir pour siège de véhicule automobile qui est mobile dans son ensemble.

L'invention a pour but de proposer un accoudoir réglable en hauteur simple et facile à monter dans l'habitacle.

A cet effet, l'invention a pour objet un accoudoir pour véhicule automobile, du type précité, caractérisé en ce que les moyens de réglage comprennent des moyens mécaniques de poussée sollicitant élastiquement la partie mobile vers une position écartée en hauteur de la partie fixe, et des moyens mécaniques de blocage des moyens de poussée dans une position sélectionnée de la partie mobile.

Suivant d'autres caractéristiques de l'invention:
- les moyens de poussée comprennent un piston monté coulissant dans un corps de guidage logé dans le corps d'accoudoir, relié à la partie mobile de l'accoudoir par une tige et sollicité élastiquement par un ressort de poussée interposé entre un fond du corps de guidage et le piston, et les moyens mécaniques de blocage comprennent des moyens de coincement de la tige de piston;
- les moyens de coincement comprennent un levier muni d'un perçage traversé par la tige, déplaçable entre une position de coincement de la tige, dans laquelle l'axe du perçage est incliné par rapport à l'axe de la tige de manière que les bords du perçage coopèrent par coincement avec le contour de cette tige, et une position de libération de la tige, dans laquelle les axes du perçage et de la tige sont sensiblement alignés de manière à permettre le coulissement de cette tige à travers le perçage ;
- le levier est sollicité élastiquement vers sa position de coincement de la tige ;
- le levier comporte une première extrémité montée articulée sur le corps de guidage et une seconde extrémité de commande faisant saillie à l'extérieur du corps d'accoudoir à travers une ouverture ménagée dans celui-ci, le perçage traversé par la tige étant ménagé entre les deux extrémités du levier ;
- un ressort de rappel du levier en position de coincement de la tige est enroulé autour de l'axe d'articulation du levier, une première extrémité de ce ressort étant solidaire du corps de guidage et une seconde extrémité de ce ressort étant solidaire de la première extrémité du levier ;
- les bords du perçage du levier sont à angles vifs.

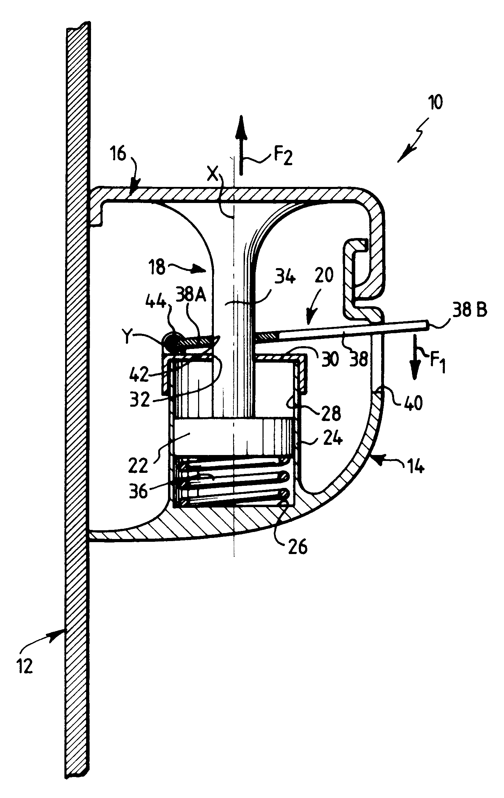

Un exemple de réalisation de l'invention sera décrit ci-dessous en se référant aux dessins annexés comportant une figure unique représentant, en coupe transversale, un accoudoir selon l'invention.

Sur la figure, on a représenté un accoudoir selon l'invention, désigné par la référence générale 10, destiné à être associé à un siège ou une banquette de véhicule automobile.

L'accoudoir 10 est fixé par exemple sur la paroi interne 12 d'une portière du véhicule.

L'accoudoir 10 comporte une partie inférieure fixe 14, formant corps d'accoudoir, destinée à être montée par des moyens connus (non représentés) sur la paroi 12.

L'accoudoir 10 comporte de plus une partie supérieure 16, portée par le corps 14 d'accoudoir, formant appui pour un coude d'utilisateur, mobile en hauteur par rapport à ce corps 14.

De préférence, la partie mobile 16 est recouverte par une matelassure (non représentée) améliorant le confort de l'utilisateur.

La partie mobile 16 est réglable en hauteur par rapport à la partie fixe grâce à des moyens de réglage comprenant des moyens 18 de poussée sollicitant élastiquement la partie mobile 16 vers une position écartée en hauteur du corps 14, et des moyens mécaniques 20 de blocage des moyens 18 de poussée dans une position sélectionnée de la partie mobile 16.

Les moyens 18 de poussée comprennent un piston 22 monté coulissant suivant un axe X sensiblement vertical, dans un corps 24 de guidage logé dans le corps 14 d'accoudoir.

Le corps 24 de guidage est délimité par un fond 26 et une paroi latérale cylindrique 28 venus de matière avec le corps 14 d'accoudoir. Le corps 24 de guidage comporte également un dessus 30, rapporté sur la paroi latérale 28, muni d'une ouverture axiale 32 formant passage pour une tige 34 d'axe X reliant, solidairement entre eux, le piston 22 et la partie supérieure 16 de l'accoudoir.

Le piston 22 est sollicité élastiquement vers le dessus 30 du corps de guidage par un ressort de poussée 36 interposé entre ce piston 22 et le fond 26 du corps de guidage.

Les moyens mécaniques 20 de blocage comprennent un levier 38 muni d'une première extrémité 38A montée articulée sur le dessus 30 du corps de guidage, autour d'un axe Y sensiblement perpendiculaire à l'axe X de déplacement du piston 22, et d'une seconde extrémité de commande 38B faisant saillie à l'extérieur du corps 14 d'accoudoir à travers une ouverture 40 ménagée dans celui-ci.

Le levier 38 est muni également d'un perçage 42 ménagé entre ses extrémités 38A,38B, de dimension supérieure au contour de la tige 34 et traversé par cette tige 34.

Le levier 38 est déplaçable entre une position haute de coincement de la tige 34, représentée sur la figure, dans laquelle l'axe du perçage 42 est incliné par rapport à l'axe X de la tige 34 de manière que les bords du perçage 42, délimités de préférence par des angles vifs, coopèrent par coincement avec le contour de cette tige, et une position basse de libération de la tige 34, dans laquelle l'axe du perçage 42 est sensiblement aligné avec l'axe de la tige 34 de manière à permettre le coulissement de cette tige à travers le perçage 42.

Le levier 38 est sollicité élastiquement vers sa position de coincement de la tige 34 par un ressort de rappel 44 enroulé autour de l'axe Y d'articulation du levier, une première extrémité de ce ressort étant solidaire du dessus 30 du corps de guidage et une seconde extrémité de ce ressort étant solidaire de l'extrémité d'articulation 38A du levier.

Pour régler en hauteur la partie mobile 16 de l'accoudoir 10, on appuie sur l'extrémité saillante 38B du levier 38 vers le bas (flèche F1), ce qui a pour effet d'aligner sensiblement les axes du perçage 42 et de la tige 34. Cette tige 34 peut alors coulisser librement à travers le perçage 42 et, sous l'effet du ressort de poussée 36, se déplace de manière à soulever la partie mobile 16 de l'accoudoir (flèche F2) jusqu'à ce que le piston 22 vienne en butée contre le dessus 30 du corps 24 de guidage et le levier 38 est en position haute de coincement de la tige 34. Dans cette position du piston 22, la hauteur de la partie mobile 16 de l'accoudoir est maximale.

Ensuite, le levier 38 étant relâché, on appuie sur la partie mobile 16 de l'accoudoir vers le bas, de manière à faire pivoter le levier 38 autour de l'axe Y vers le bas et à enfoncer la tige 34 dans le corps 24 de guidage à travers le perçage 42, ce mouvement s'effectuant à frottement. Lorsque la partie mobile 16 est à la hauteur souhaitée, on relâche la pression exercée sur elle. Les bords à angles vifs du perçage 42 du levier 38 coopèrant par coincement avec le contour de la tige 34 s'opposent, d'une part à la force de poussée du ressort 36 ayant tendance à faire sortir la tige 34 du corps 24 de guidage, et d'autre part à la force d'appui exercée normalement par un coude d'utilisateur sur la partie mobile 16 ayant tendance à enfoncer la tige 34 dans le corps 24 de guidage de sorte que l'accoudoir reste dans la position définie.

L'invention, dont on vient de décrire un exemple de réalisation, permet donc de régler la hauteur d'un accoudoir, ceci avec des moyens très simples, peu coûteux et faciles à monter dans l'habitacle d'un véhicule.

## Revendications

1. Accoudoir pour véhicule automobile, du type comportant une partie inférieure fixe (14), formant corps d'accoudoir, portant une partie supérieure (16) formant appui pour un coude d'utilisateur, mobile en hauteur par rapport à la partie fixe (14), et des moyens (18,20) de réglage de la hauteur de la partie mobile (16) par rapport à la partie fixe (14), caractérisé en ce que les moyens de réglage comprennent des moyens mécaniques (18) de poussée sollicitant élastiquement la partie mobile (16) vers une position écartée en hauteur de la partie fixe (14), et des moyens mécaniques (20) de blocage des moyens (18) de poussée dans une position sélectionnée de la partie mobile (16).

2. Accoudoir selon la revendication 1, caractérisé en ce que les moyens (18) de poussée comprennent un piston (22) monté coulissant dans un corps (24) de guidage logé dans le corps (14) d'accoudoir, relié à la partie mobile (16) de l'accoudoir par une tige (34) et sollicité élastiquement par un ressort de poussée (36) interposé entre un fond (26) du corps (24) de guidage et le piston (22), et en ce que les moyens mécaniques (20) de blocage comprennent des moyens (38) de coincement de la tige (34) de piston.

3. Accoudoir selon la revendication 2, caractérisé en ce que les moyens de coincement comprennent un levier (38) muni d'un perçage (42) traversée par la tige (34), déplaçable entre une position de coincement de la tige (34), dans laquelle l'axe du perçage (42) est incliné par rapport à l'axe de la tige (34) de manière que les bords du perçage (42) coopèrent par coincement avec le contour de cette tige (34), et une position de libération de la tige (34), dans laquelle les axes du perçage (42) et de la tige (34) sont sensiblement alignés de manière à permettre le coulissement de cette tige (34) à travers le perçage (42).

4. Accoudoir selon la revendication 3, caractérisé en ce que le levier (38) est sollicité élastiquement vers sa position de coincement de la tige (34).

5. Accoudoir selon la revendication 3 ou 4, caractérisé en ce que le levier (38) comporte une première extrémité (38A) montée articulée sur le corps (24) de guidage et une seconde extrémité (38B) de commande faisant saillie à l'extérieur du corps (14) d'accoudoir à travers une ouverture (40) ménagée dans celui-ci, le perçage (42) traversé par la tige (34) étant ménagé entre les deux extrémités (38A,38B) du levier (38).

6. Accoudoir selon les revendications 4 et 5 prises ensemble, caractérisé en ce qu'un ressort (44) de rappel du levier (38) en position de coincement de la tige (34) est enroulé autour de l'axe (Y) d'articulation du levier (38), une première extrémité de ce ressort (44) étant solidaire du corps (24) de guidage et une seconde extrémité de ce ressort (44) étant solidaire de la première extrémité (38A) du levier (38).

7. Accoudoir selon l'une quelconque des revendications 3 à 6, caractérisé en ce que les bords du perçage (42) du levier (38) sont à angles vifs.

## Claims

1. Armrest for an automotive vehicle, of the type including a stationary lower part (14) forming the armrest body, bearing an upper part (16) forming a rest for the user's elbow, this part being movable in terms of height with respect to the stationary part (14), and means (18, 20) for adjusting the height of the movable part (16) with respect to the stationary part (14), characterized in that the adjustment means comprise mechanical thrusting means (18) elastically urging the movable part (16) towards a part which is distant, in terms of height, from the stationary part (14), and mechanical means (20) for locking the thrusting means (18) when the movable part (16) is in a selected position.

2. Armrest according to Claim 1, characterized in that the thrusting means (18) comprise a piston (22) mounted so that it can slide in a guide body (24) housed in the armrest body (14), connected to the movable part (16) of the armrest by a rod (34) and elastically urged by a thrusting spring (36) interposed between a bottom (26) of the guide body (24) and the piston (22), and in that the mechanical locking means (20) comprise means (38) for jamming the piston rod (34).

3. Armrest according to Claim 2, characterized in that the jamming means comprise a lever (38) with a drilling (42) through which the rod (34) passes, which can be shifted between a position for jamming the rod (34), in which position the axis of the drilling (42) is inclined with respect to the axis of the rod (34) so that the edges of the drilling (42) interact in a jamming manner with the periphery of this rod (34) and a position in which the rod (34) is free, in which position the axes of the drilling (42) and of the rod (34) are substantially aligned so as to allow this rod (34) to slide through the drilling (42).

4. Armrest according to Claim 3, characterized in that the lever (38) is elastically urged towards its position for jamming the rod (34).

5. Armrest according to Claim 3 or 4, characterized in that the lever (38) includes a first end (38A) mounted with an articulation on the guide body (24), and a second, actuating, end (38B) projecting out of the armrest body (14) through an aperture (40) made therein, the drilling (42) through which the rod (34) passes being formed between the two ends (38A, 38B) of the lever (38).

6. Armrest according to Claims 4 and 5 taken together, characterized in that a spring (44) for returning the lever (30) to the position for jamming the rod (34) is wound around the axis of articulation (Y) of the lever (38), a first end of this spring (44) being secured to the guide body (24) and a second end of this spring (44) being secured to the first end (38A) of the lever (38).

7. Armrest according to any one of claims 3 to 6, characterized in that the drilling (42) in the lever (38) is sharp-edged.

## Patentansprüche

1. Armlehne für ein Kraftfahrzeug vom Typ, aufweisend einen unteren feststehenden Teil (14), der einen Armlehnenkörper bildet, einen oberen Teil (16) trägt, der für den Ellenbogen eines Benutzers eine Auflage bildet und in bezug auf den feststehenden Teil (14) in der Höhe einstellbar ist, und Mittel (18, 20) zur Einstellung der Höhe des einstellbaren Teils (16) in bezug auf den feststehenden Teil (14),
dadurch gekennzeichnet, daß die Einstellungsmittel mechanische Druckmittel (18) aufweisen, die den feststehenden Teil (16) in Richtung auf eine in der Höhe von dem feststehenden Teil (14) beabstandeten Position elastisch belasten, und mechanische Blockierungsmittel (20) der Druckmittel (18) in einer ausgewählten Position des einstellbaren Teils (16).

2. Armlehne nach Anspruch 1,
dadurch gekennzeichnet, daß die Druckmittel (18) einen Kolben (22) aufweisen, der in einem Führungskörper (24) verschiebbar angebracht ist, der in dem Armlehnenkörper (14) gelagert ist, der mit dem einstellbaren Teil (16) der Armlehne durch eine Stange (34) verbunden und durch eine Druckfeder (36) elastisch belastet ist, die zwischen einem Boden (26) des Führungskörpers (24) und dem Kolben (22) eingefügt ist, und daß die mechanischen Blockierungsmittel (20) Klemmittel (38) für die Kolbenstange (34) aufweisen.

3. Armlehne nach Anspruch 2,
dadurch gekennzeichnet, daß die Klemmittel einen Hebel (38) aufweisen, der mit einer Bohrung (42) versehen ist, die durch die Stange (34) durchquert ist, der zwischen einer Klemmposition der Stange (34), in der die Achse der Bohrung (42) in bezug auf die Achse der Stange (34) derart geneigt ist, daß die Ränder der Bohrung (42) durch Klemmung mit dem Umriß dieser Stange (34) zusammenwirken, und einer Freigabeposition (34) verschiebbar ist, in der die Achsen der Bohrung (42) und der Stange (34) im wesentlichen derart ausgerichtet sind, daß sie das Gleiten dieser Stange (34) querdurch die Bohrung (42) gestatten.

4. Armlehne nach Anspruch 3,
dadurch gekennzeichnet, daß der Hebel (38) in Richtung auf seine Klemmposition der Stange (34) elastisch belastet ist.

5. Armlehne nach Anspruch 3 oder 4,
dadurch gekennzeichnet, daß der Hebel (38) ein erstes Ende (38A) aufweist, das an dem Führungskörper (24) schwenkbar angeordnet ist und ein zweites Betätigungsende (38B) außerhalb des Armlehnenkörpers (14) querdurch eine Öffnung (40) vorspringt, die in diesem angeordnet ist, wobei die durch die Stange (34) durchquerte Bohrung (42) zwischen den zwei Enden (38A, 38B) des Hebels (38) angeordnet ist.

6. Armlehne nach Anspruch 4 und 5 zusammengenommen,
dadurch gekennzeichnet, daß eine Spannfeder (44) des Hebels (38) in der Klemmposition der Stange (34) um eine Gelenkachse (Y) des Hebels (38) zusammengerollt ist, wobei ein erstes Ende dieser Feder (44) mit dem Führungskörper (24) und ein zweites Ende dieser Feder (44) mit dem ersten Ende (38A) des Hebels (38) fest verbunden ist.

7. Armlehne nach einem der Ansprüche 3 bis 6,
dadurch gekennzeichnet, daß die Ränder der Bohrung (42) des Hebels (38) scharfkantig sind.
